# EUROPÄISCHE PATENTSCHRIFT

(11) **EP 4 532 955 B1**
(45) Veröffentlichungstag und Bekanntmachung des Hinweises auf die Patenterteilung: **01.04.2026**
(21) Anmeldenummer: 23720154.6
(22) Anmeldetag: 25.04.2023
(51) Int. Cl.: F16H 57/02, F16H 57/023, F16H 57/033

(54) **GETRIEBEMOTOR, AUFWEISEND EINEN ELEKTROMOTOR UND EIN GETRIEBE**
GEARED MOTOR COMPRISING AN ELECTRIC MOTOR AND A GEARBOX
MOTEUR À TRAIN D'ENGRENAGES COMPRENANT UN MOTEUR ÉLECTRIQUE ET UNE BOÎTE DE VITESSES

(30) Priorität: 24.05.2022 DE 102022001828
(43) Veröffentlichungstag der Anmeldung: 09.04.2025
(73) Patentinhaber: SEW-EURODRIVE GmbH & Co. KG, 76646 Bruchsal (DE)
(72) Erfinder: TEGELTIJA, Miki, 76689 Karlsdorf-Neuthard (DE)
(86) Internationale Anmeldenummer: PCT/EP2023/060848
(87) Internationale Veröffentlichungsnummer: WO 2023/227314

(56) Entgegenhaltungen:
- EP-A1- 3 586 040
- EP-B1- 3 586 040
- WO-A1-2022/218703
- US-A1- 2008 197 733
- US-A1- 2015 349 606

## Beschreibung

Die Erfindung betrifft einen Getriebemotor, aufweisend einen Elektromotor und ein Getriebe.

Es ist allgemein bekannt, dass bei einem Getriebemotor ein Getriebe von Elektromotor angetrieben wird.

Aus der JP 2008- 180 319 A ist ein Getriebemotor bekannt.

Aus der DE 10 2018 000 963 A1 ist ein Antrieb bekannt.

Aus der DE 10 2020 128 970 A1 ist ein Getriebemotor bekannt, der ein mehrstufige Getriebe aufweist.

Aus der DE 103 32 757 A1 ist ein Servomotor bekannt.

Aus der DE 10 2020 003 549 A1 ist ein Getriebemotor mit Adapterteil bekannt.

**Aus der** EP 3 586 040 A0 **ist als nächstliegender Stand der Technik ein Antrieb bekannt.**

**Aus der** US 2008/0197733 A1 **ist ein Elektromotor bekannt.**

**Aus der** US 2015/0349606 A1 **ist eine elektrische Anordnung bekannt.**

Der Erfindung liegt daher die Aufgabe zugrunde, bei einem Getriebemotor eine einfache Montage und/oder Wartung zu ermöglichen.

Erfindungsgemäß wird die Aufgabe bei dem Getriebemotor nach den in Anspruch 1 angegebenen Merkmalen gelöst.

Wichtige Merkmale der Erfindung bei dem Getriebemotor, aufweisend einen Elektromotor und ein Getriebe, sind, dass das Getriebe ein Flanschteil aufweist, welches an einem Gehäuseteil des Getriebes mittels erster Schrauben befestigt ist,
wobei das Flanschteil, insbesondere auf seiner dem Elektromotor zugewandten Seite, einen hohlzylindrisch geformten Kragenbereich aufweist,
insbesondere wobei die Zylinderachse des hohlzylindrisch geformten Kragenbereichs koaxial ausgerichtet ist zur Drehachse der Rotorwelle des Elektromotors,
wobei ein Verbindungsteil einen ersten hohlzylindrisch geformten Kragenbereich und einen insbesondere dazu koaxial ausgerichteten, zweiten hohlzylindrisch geformten Kragenbereich aufweist,
wobei der erste Kragenbereich radial außerhalb des zweiten Kragenbereiches angeordnet ist,
wobei der erste Kragenbereich auf den Kragenbereich des Flanschteils aufgesteckt ist, insbesondere diesen berührend aufgesteckt ist,
insbesondere wobei der zweite Kragenbereich radial innerhalb des Kragenbereich des Flanschteils angeordnet ist,
wobei das Verbindungsteil mit dem Elektromotor, insbesondere mit einem Gehäuseteil oder Lagerflansch des Elektromotors, verbunden ist mittels zweiter Schrauben.

Von Vorteil ist dabei, dass mittels der hohlzylindrischen Kragenberieche eine einfache Zentrierung durch axial gerichtetes Einstecken bewirkt ist. Somit ist beim Verbinden des Elektromotors mit dem Getriebe die Zentrierung schnell und einfach ermöglicht. Dabei wird auch die Rotorwelle in ein Kupplungsteil eingesteckt und somit drehfest verbunden mit der mit dem Kupplungsteil drehfest verbundenen eintreibenden Welle. Alternativ ist aber auch das Kupplungsteil zuerst mit der Rotorwelle verbindbar und beim Steckverbinden des Motors mit dem Getriebe das Kupplungsteil mit der eintreibenden Welle. Somit ist also ein einfaches Verbinden bei Herstellung oder Wartung ermöglicht.

**Erfindungsgemäß** ragen am zweiten Kragenbereich Bajonettflügel radial hervorstehen und/oder nach radial außen hervor. Von Vorteil ist dabei, dass eine schnelle Verbindung mittels Bajonettverbindung ermöglicht ist.

Bei einer vorteilhaften Ausgestaltung weist das Flanschteil eine durchgehende Ausnehmung, insbesondere axial durchgehende Ausnehmung, auf, in welche zumindest zwei, in Umfangsrichtung voneinander beabstandete, insbesondere auf demselben Radialabstand angeordnete, insbesondere zueinander gleichgeformte, Vorsprünge nach radial innen gerichtet hineinragen,
wobei der zweite Kragenbereich durch die Ausnehmung hindurchragt. Von Vorteil ist dabei, dass eine schnelle und einfache Bajonettverbindung ermöglicht ist. Somit ist nach dem axialen Einstecken mit Überwindung der vom Federelement erzeugten Federkraft nur noch eine Drehung notwendig, um den Motor mit dem Getriebe zu verbinden.

Bei einer vorteilhaften Ausgestaltung ist der größte Radialabstand der Bajonettflügel kleiner als der größte lichte Radius der Ausnehmung, insbesondere als die Hälfte des größten lichten Innendurchmessers der Ausnehmung, und größer als der kleinste lichte Innendurchmesser der Ausnehmung in dem von den Erhebungen überdeckten Umfangswinkelbereich. Von Vorteil ist dabei, dass die Bajonettflügel einfach einsteckbar und durch Drehung dann die Fixierung ermöglicht ist, wobei das Federelement eine axial wirkende Federkraft erzeugt, welche eine Reibungskraft bewirkt, welche die sichere Fixierung bewirkt.

Bei einer vorteilhaften Ausgestaltung umfasst der in axialer Richtung vom zweiten Kragenbereich überdeckte Bereich den in axialer Richtung vom ersten Kragenbereich überdeckten Bereich. Von Vorteil ist dabei, dass zwischen den beiden Kragenbereichen das Federelement geschützt anordenbar ist. Denn ist radial innen und außen von jeweils einem Kragenbereich.

Bei einer vorteilhaften Ausgestaltung drückt ein am Verbindungsteil abgestütztes Federelement, insbesondere eine Spiralfeder, auf das Flanschteil. Von Vorteil ist dabei, dass die Bajonettverbindung gesichert ist mittels des Federelements. Denn dieses drückt in axialer Richtung und erzeugt somit eine Reibungskraft für die Bajonettflügel, die somit in Umfangsrichtung gesichert sind.

Bei einer vorteilhaften Ausgestaltung ist das Federelement radial innerhalb des ersten Kragenbereichs und radial innerhalb des Kragenbereichs des Flanschteils angeordnet. Von Vorteil ist dabei, dass das Federelement geschützt anordenbar ist.

Bei einer vorteilhaften Ausgestaltung ist das Federelement radial außerhalb des zweiten Kragenbereichs angeordnet. Von Vorteil ist dabei, dass das Federelement geführt ist auf dem zweiten Kragenberiech, insbesondere wenn es als Spiralfeder ausgeführt ist.

Bei einer vorteilhaften Ausgestaltung umfasst der in axialer Richtung vom ersten Kragenbereich überdeckte Bereich den vom Federelement in axialer Richtung überdeckten Bereich. Von Vorteil ist dabei, dass das Federelement radial umgeben ist vom ersten Kragenbereich und somit besonders gut geschützt ist.

Bei einer vorteilhaften Ausgestaltung ist das Federelement an axial gerichteten Erhebungen des Verbindungteils abgestützt,
insbesondere wobei die Erhebungen in Umfangsrichtung voneinander beabstandet sind und/oder wobei die Erhebungen auf dem selben Radialabstand angeordnet sind. Von Vorteil ist dabei, dass die Erhebungen optimiert als Abstützfläche ausführbar sind.

Bei einer vorteilhaften Ausgestaltung sind die zweiten Schrauben, insbesondere die Schraubenköpfe der zweiten Schrauben, in axialer Richtung vom Federelement beabstandet. Von Vorteil ist dabei, dass die Erhebungen alleine das Federelement abstützen und somit optimiert ausformbar sind. Die Schraubenköpfe stören somit das Abstützen des Federelements nicht.

Bei einer vorteilhaften Ausgestaltung sind die zweiten Schrauben auf demselben Radialabstand angeordnet wie die Erhebungen. Von Vorteil ist dabei, dass eine möglichst kompakte Bauart ermöglicht ist.

Bei einer vorteilhaften Ausgestaltung überlappt der von den zweiten Schrauben überdeckte Radialabstandsbereich mit dem von den Erhebungen überdeckten Radialabstandsbereich oder umfasst ihn. Von Vorteil ist dabei, dass eine möglichst kompakte Bauart ermöglicht ist.

Bei einer vorteilhaften Ausgestaltung weist das Flanschteil einen quadratischen oder rechteckförmigen radialen Außenumfang mit gerundet ausgeführten Ecken auf. Von Vorteil ist dabei, dass das Getriebe mit einem Quadratflansch ausführbar ist und trotzdem mit einem Elektromotor verbindbar ist, der einen Rundflansch aufweist.

Bei einer vorteilhaften Ausgestaltung sind die Rotorwelle in eine Axialbohrung eines Kupplungselements, dessen insbesondere tangential gerichtete ebenen Abflachungen parallel zu entsprechenden ebenen Abflachungen der eintreibenden Welle des Getriebes ausgerichtet, wobei die jeweilige Abflachung der eintreibenden Welle von der jeweiligen Abflachung des Kupplungselements nur mittels einer auf die eintreibende Welle aufgesteckten Kunststoffkappe getrennt sind. Von Vorteil ist dabei, dass eine einfache Verbindung ermöglicht ist.

Bei einer vorteilhaften Ausgestaltung ist das Flanschteil auf seiner vom Elektromotor abgewandten Seite hervorstehende, insbesondere axial hervorstehende, Zentrierzapfen aufweist, deren radial Innenseite oder radial Außenseite gekrümmt ausgeführt, insbesondere als Teilbereich einer Zylindermantelfläche. Von Vorteil ist dabei, dass die Zentrierzapfen nicht in entsprechende Zentrierlöcher eingebracht werden müssen sondern mittels ihren gekrümmten Oberflächenbereichen auf einem Kreis beziehungsweise Zylindern anliegen, wobei in Umfangsrichtung ein Freiheitsgrad für Toleranzbedingte Abweichungen belassen wird.

Bei einer vorteilhaften Ausgestaltung weist das Getriebegehäuse konvexe Zentrierflächen auf, an denen die Zentrierzapfen mit ihrer gekrümmt ausgeführten Innenseite oder Außenseite anliegen,
insbesondere wobei die konvexen Zentrierflächen auf der Zylindermantelfläche liegen. Von Vorteil ist dabei, dass eine hochgenaue Zentrierung in radialer Richtung ermöglicht ist, wobei in Umfangsrichtung ein Freiheitsgrad für Toleranzbedingte Abweichungen belassen wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

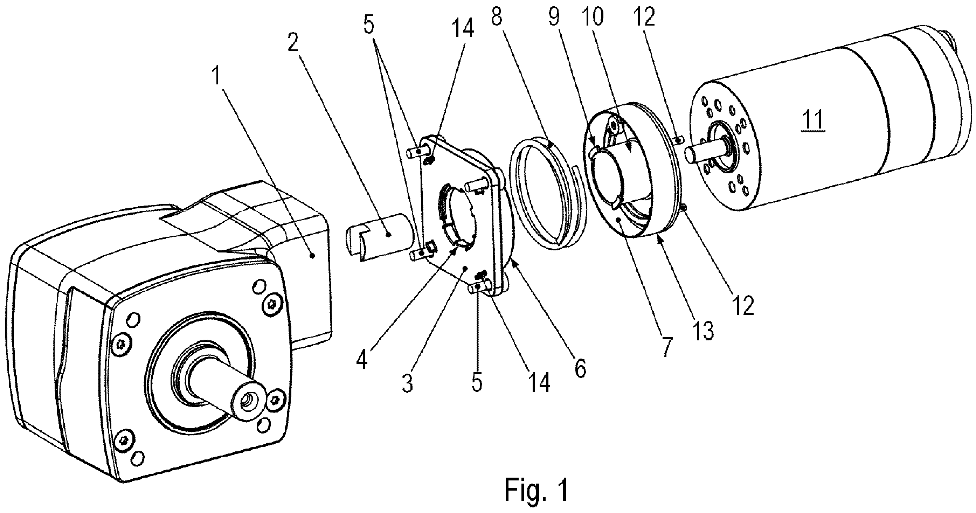

In der Figur 1 ist ein erfindungsgemäßer Getriebemotor explodiert in Schrägansicht dargestellt.

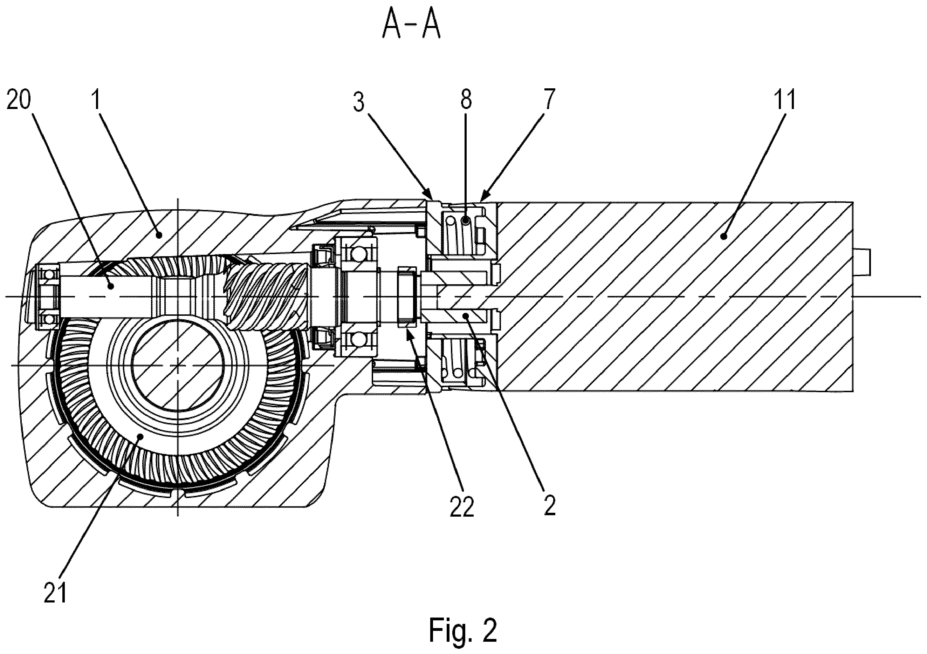

In der Figur 2 ist ein Längsschnitt durch den Getriebemotor dargestellt.

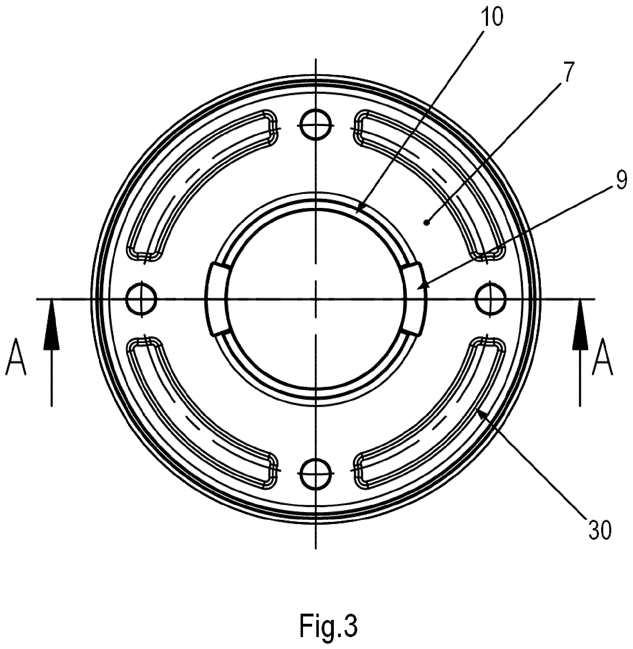

In der Figur 3 ist eine Draufsicht auf ein Verbindungsteil 7 eines Bajonettverbindungsbereichs des Motors gezeigt.

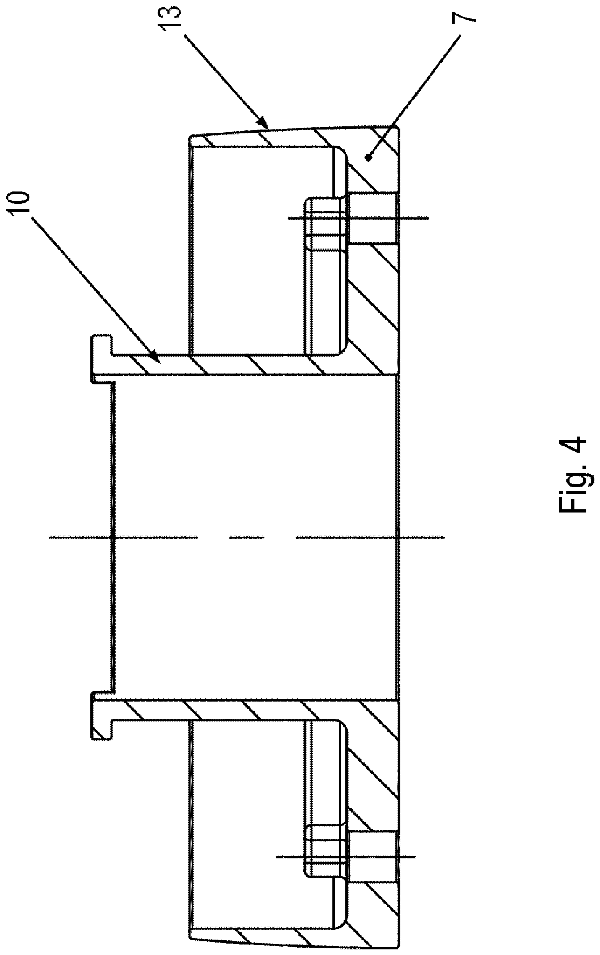

In der Figur 4 ist ein Querschnitt durch das Verbindungsteil 7 dargestellt.

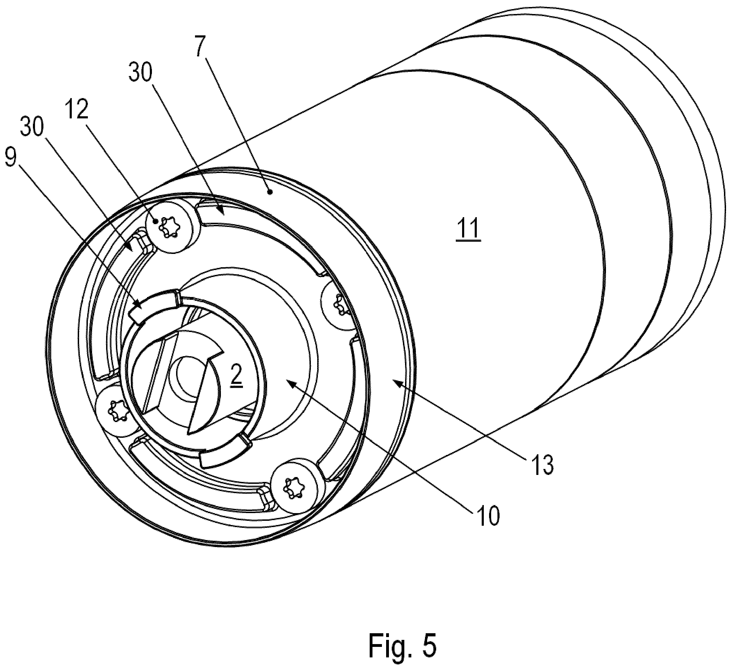

In der Figur 5 ist eine Schrägansicht auf den motorischen Teil des Getriebemotors dargestellt.
In der Figur 6 ist eine Schrägansicht auf den eintreibenden Bereich des Getriebes des Getriebemotors dargestellt.

Wie in den Figuren dargestellt, weist der Getriebemotor einen Elektromotor 11 auf, dessen Rotorwelle über ein Kupplungsteil 2 mit der eintreibenden Welle 20 des Getriebes des Getriebemotors drehfest verbunden ist.

Hierzu ist die Rotorwelle in eine Bohrung des Kupplungsteils 2 eingesteckt und kraftschlüssig verbunden und/oder mittels einer Madenschraube, welche in einer radial gerichteten Gewindebohrung des Kupplungsteils 2 eingeschraubt ist, kraftschlüssig verbunden.

Das Kupplungsteil weist zwei Klauenbereiche auf, deren eben Innenseiten an jeweiligen Abflachungen der eintreibenden Welle 20 anliegen, insbesondere sodass die eintreibende Welle 20 mit dem Kupplungsteil 2 drehfest verbunden ist, wobei eine Kunststoffkappe 22 stirnseitig auf der der Rotorwelle zugewandten Seite der eintreibenden Welle auf die eintreibende Welle aufgesteckt ist. Die Kunststoffkappe 22 bedeckt auch die Abflachungen und ist somit zwischengeordnet zwischen die eintreibende Welle 20 und das Kupplungsteil 2.

Von Vorteil ist die Abdämpfung von Drehstößen im Bereich der Einleitung des Drehmoments von dem Kupplungsteil.

Das Kupplungsteil 2 mit der eintreibenden Welle 20 zusammen ragt durch eine Ausnehmung des Getriebegehäuses 1 hindurch.

Ein Flanschteil 3 ist mit dem Getriebegehäuse 1 mittels erster Schrauben 5 verbunden, deren Gewindebereich in jeweilige Axialbohrungen des Getriebegehäuses 1 eingeschraubt ist und deren Schraubenköpfe das Flanschteil 3 an das Getriebegehäuse 1 andrücken. Das Flanschteil 3 weist eine Ausnehmung auf, durch welche das aus dem Kupplungsteil 2 mit der eintreibenden Welle 20 gebildete drehende Teil hindurchragt.

Das Flanschteil 3 weist eine im Wesentliche quadratische Außenkontur auf. Die ersten Schrauben 5 sind im Bereich der Ecken der quadratischen Außenkontur angeordnet.

Das Flanschteil 3 weist einen zum Elektromotor 11 hin hervorragenden hohlzylindrisch ausgebildeten Kragenbereich 6 auf.

Ein Verbindungsteil 7 weist auf seiner dem Getriebe zugewandten Seite einen radial inneren, hohlzylindrischen Kragenbereich 10 und einen dazu konzentrisch angeordneten radial äußeren, hohlzylindrischen Kragenbereich 13 auf, insbesondere der einen größeren Durchmesser aufweist als der radial innere Kragenbereich 10.

Die beiden Kragenbereiche 10 und 13 sind mit einem lochscheibenartigen Boden des Verbindungsteils 7 verbunden. Vorzugsweise weist das Verbindungsteil 7 somit eine ananasscheibenförmige Ausnehmung zwischen den beiden Kragenbereichen 10 und 13 auf.

Auf der dem Getriebe zugewandten Seite des Bodens sind in Umfangsrichtung voneinander beabstandete Erhebungen 30 ausgebildet, welche als Auflagefläche, insbesondere also Fläche zum Abstützen, des Federelements 8 dienen.

Die Erhebungen 30 erstrecken sich in Umfangsrichtung. Insbesondere sind die Erhebungen 30 in Umfangsrichtung weiter ausgedehnt als in axialer Richtung und in radialer Richtung. Dabei sind diese Richtungen stets auf die Drehachse der eintreibenden Welle 20 bezogen.

Das an den Erhebungen 30 abgestützte Federelement 8 drückt auf das Flanschteil 3. Somit werden das Flanschteil 3 und an Erhebungen 30 axial auseinander gedrückt und somit die Bajonettverbindung gesichert.

Zur Bewirkung der formschlüssigen Verbindung der Bajonettverbindung weist das Verbindungsteil 7 am äußeren Rand des radial inneren Kragenbereichs 10 jeweils um 90° abgebogene, in Umfangsrichtung voneinander beabstandete Zungen auf, so dass diese radial hervorstehen. Der radial äußere hohlzylindrische Kragenbereich 13 wird auf den am Flanschteil 3 ausgebildeten Kragenbereich aufgesteckt und/oder aufgeschoben und somit geführt. Das Flanschteil 3 zentriert somit mittels seines Kragenbereichs das Verbindungsteil 7 und somit den Elektromotor 11.

Auf diese Weise ist das Verbindungsteil 7, insbesondere in axialer Richtung, geführt von dem Flanschteil 3.

Zum Herstellen der Bajonettverbindung werden die Bajonettflügel 9, insbesondere also die abgebogenen Zungen, durch den von den Vorsprüngen 4 in axialer Richtung überdeckten Bereich hindurchgeführt und dann durch eine Drehung des Verbindungsteils 7 hintergriffen.

Das Flanschteil 3 weist an seiner vom Elektromotor 11 abgewandten Seite axial gerichtet hervorragende Zentrierzapfen 14 auf, die an entsprechenden Zentrierflächen des Getriebegehäuses anliegen. Die Zentrierflächen sind dabei vorzugsweise alle jeweils ein Teilbereich einer Mantelfläche eines einzigen Zylinders.

Das Verbindungsteil 7 ist mittels axial durch das Verbindungsteil 7 hindurchragender zweiter Schrauben 12 mit dem Elektromotor verbunden. Insbesondere sind die zweiten Schrauben 12 in axial gerichtete Gewindebohrungen eines Gehäuseteils, insbesondere Lagerflansches, des Elektromotors 11 eingeschraubt. Hierbei drücken die Schraubenköpfe der zweiten Schrauben 12 das Verbindungsteil 7 an den Elektromotor 11 an. Die Erhebungen 30 ragen jedoch in axialer Richtung weiter hervor als diese Schraubenköpfe der zweiten Schrauben. Somit sind die Schraubenköpfe beabstandet von dem Federelement 8.

Vorzugsweise sind vier Erhebungen 30 vorgesehen und die Schraubenköpfe der zweiten Schrauben 12 auf gleichem Radialabstand wie die Erhebungen 30 angeordnet. Insbesondere überlappt der von den Schraubenköpfen überdeckte Radialabstandsbereich mit dem von den Erhebungen 30 überdeckten Radialabstandsbereich oder der von den Schraubenköpfen überdeckte Radialabstandsbereich umfasst den von den Erhebungen 30 überdeckten Radialabstandsbereich.

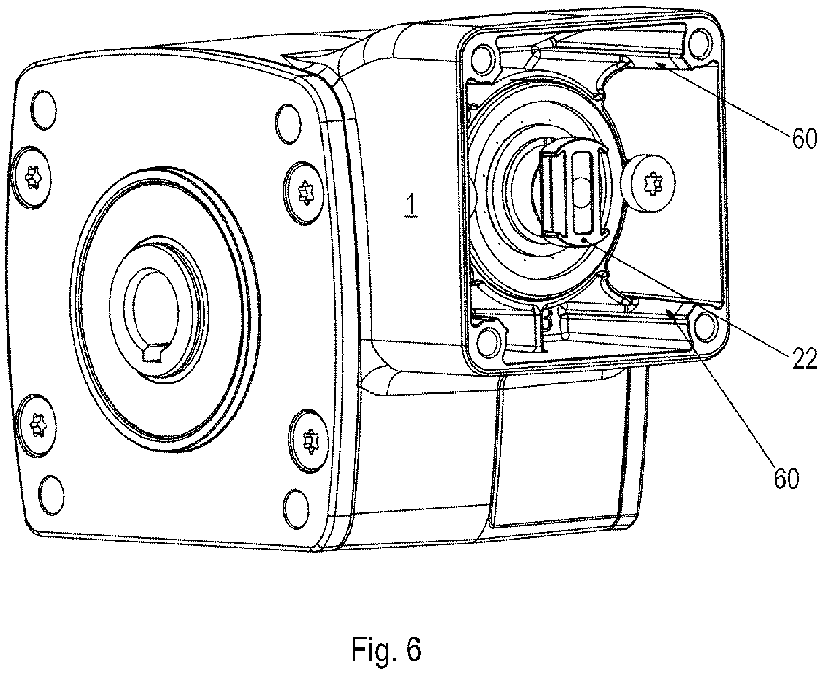

Wie in der Figur 6 dargestellt, ist die Kunststoffkappe 22 auf die eintreibende Welle 20 aufgesteckt.

Wie in der Figur 6 sichtbar, weist das Getriebegehäuse 1 konvexe Zentrierflächen 60 auf, an denen die Zentrierzapfen 14 anliegen. Die konvexen Oberflächenabschnitte der Zentrierflächen 60 liegen gemeinsam auf einer einzigen gedachten Zylindermantelfläche. Somit sind die Zentrierzapfen 14 nicht nur nach radial außen mittels der Zentrierflächen 60 begrenzt, sondern das Verbindungsteil 7 ist zum Getriebegehäuse 1 zentriert.

Bei weiteren erfindungsgemäßen Ausführungsbeispielen wird das Verbindungsteil 7 nicht aus Metall, sondern aus Kunststoff ausgeführt. Somit ist keine Masseverbindung zwischen Getriebe und Elektromotor 11 vorhanden, so dass Getriebe und Elektromotor 11 voneinander galvanisch getrennt sind. Denn zwischen dem Kupplungsteil 2 und der eintreibenden Welle 20 ist die Kunststoffkappe 22 angeordnet, sodass auch der drehende Teil des Getriebemotors eine galvanische Trennung aufweist.

In Weiterbildung ist somit ein Verschleiß der Kunststoffkappe 22 detektierbar, indem eine Spannungsquellemit dem Getriebemotor verbunden wird, insbesondere wobei ein erstes Potential an ein Gehäuseteil, insbesondere an den Lagerflansch, des Elektromotors 11 angelegt wird und ein zweites Potential an das Getriebegehäuse, insbesondere an das Flanschteil 3 angelegt wird und ein Strom erfasst wird. Denn bei Verschleiß der Kunststoffkappe 22 entsteht eine elektrisch leitende Verbindung zwischen der Rotorwelle des Elektromotors und der eintreibenden Welle 20 des Getriebes.

Bei weiteren erfindungsgemäßen Ausführungsbeispielen werden statt der Zentrierzapfen 14 andere Zentriermittels verwendet.

### Bezugszeichenliste

1 Getriebegehäuse
2 Kupplungsteil
3 Flanschteil
4 Vorsprung, insbesondere nach radial innen gerichteter Vorsprung
5 erste Schraube
6 Kragenbereich des Flanschteils 3
7 Verbindungsteil
8 Federelement, insbesondere Spiralfeder
9 Bajonettflügel
10 radial innerer Kragenbereich des Verbindungsteils 7
11 Elektromotor
12 zweite Schrauben
13 radial äußerer Kragenbereich des Verbindungsteils 7
14 Zentrierzapfen mit konvexer Zentrierfläche
20 eintreibende Welle
21 Zahnrad, insbesondere Spiroplan-Rad
22 Kunststoffkappe
30 Erhebung, insbesondere Auflagefläche für Federelement 8
60 Zentrierfläche

## Patentansprüche

1. Getriebemotor, aufweisend einen Elektromotor (11) und ein Getriebe,
wobei das Getriebe ein Flanschteil (3) aufweist, welches an einem Gehäuseteil des Getriebes mittels erster Schrauben (5) befestigt ist,
**dadurch gekennzeichnet, dass**
das Flanschteil (3) auf seiner dem Elektromotor (11) zugewandten Seite einen hohlzylindrisch geformten Kragenbereich (6) aufweist,
wobei die Zylinderachse des hohlzylindrisch geformten Kragenbereichs koaxial ausgerichtet ist zur Drehachse der Rotorwelle des Elektromotors (11),
wobei ein Verbindungsteil (7) einen ersten hohlzylindrisch geformten Kragenbereich (13) und einen dazu koaxial ausgerichteten, zweiten hohlzylindrisch geformten Kragenbereich (10) aufweist,
wobei der erste Kragenbereich (13) radial außerhalb des zweiten Kragenbereiches (10) angeordnet ist,
wobei der erste Kragenbereich (13) auf den Kragenbereich (6) des Flanschteils (3) aufgesteckt ist,
wobei der zweite Kragenbereich (10) radial innerhalb des Kragenbereichs (6) des Flanschteils (3) angeordnet ist,
wobei das Verbindungsteil (7) mit dem Elektromotor (11), verbunden ist mittels zweiter Schrauben, wobei am zweiten Kragenbereich (10) Bajonettflügel (9) radial hervorstehen und/oder nach radial außen hervorragen.

2. Getriebemotor nach Anspruch 1,
**dadurch gekennzeichnet, dass**
das Flanschteil (3) eine durchgehende Ausnehmung, aufweist, in welche zumindest zwei, in Umfangsrichtung voneinander beabstandete, Vorsprünge nach radial innen gerichtet hineinragen,
wobei der zweite Kragenbereich (10) durch die Ausnehmung hindurchragt.

3. Getriebemotor nach Anspruch 2
**dadurch gekennzeichnet, dass**
der größte Radialabstand der Bajonettflügel (9) kleiner als der größte lichte Radius der Ausnehmung, ist und größer als der kleinste lichte Innendurchmesser der Ausnehmung in dem von den Erhebungen überdeckten Umfangswinkelbereich.

4. Getriebemotor nach einem der vorangegangenen Ansprüche,
**dadurch gekennzeichnet, dass**
der in axialer Richtung vom zweiten Kragenbereich (10) überdeckte Bereich den in axialer Richtung vom ersten Kragenbereich (6) überdeckten Bereich umfasst.

5. Getriebemotor nach einem der vorangegangenen Ansprüche,
**dadurch gekennzeichnet, dass**
ein am Verbindungsteil (7) abgestütztes Federelement (8), , auf das Flanschteil (3) drückt.

6. Getriebemotor nach Anspruch 5,
**dadurch gekennzeichnet, dass**
das Federelement (8) radial innerhalb des ersten Kragenbereichs (6) und radial innerhalb des Kragenbereichs des Flanschteils (3) angeordnet ist.

7. Getriebemotor nach einem der vorangegangenen Ansprüche 5 oder 6,
**dadurch gekennzeichnet, dass**
das Federelement (8) radial außerhalb des zweiten Kragenbereichs angeordnet ist,
und dass
der in axialer Richtung vom ersten Kragenbereich (6) überdeckte Bereich den vom Federelement (8) in axialer Richtung überdeckten Bereich umfasst.

8. Getriebemotor nach einem der vorangegangenen Ansprüche 5 bis 7,
**dadurch gekennzeichnet, dass**
das Federelement (8) an axial gerichteten Erhebungen des Verbindungteils abgestützt ist,

9. Getriebemotor nach einem der vorangegangenen Ansprüche,
**dadurch gekennzeichnet, dass**
zweiten Schrauben, , in axialer Richtung vom Federelement (8) beabstandet sind.

10. Getriebemotor nach Anspruch 9,
**dadurch gekennzeichnet, dass**
die zweiten Schrauben auf demselben Radialabstand angeordnet sind wie die Erhebungen.

11. Getriebemotor nach einem der vorangegangenen Ansprüche 9 oder 10 **dadurch gekennzeichnet, dass**
der von den zweiten Schrauben überdeckte Radialabstandsbereich mit dem von den Erhebungen überdeckten Radialabstandsbereich überlappt oder ihn umfasst.

12. Getriebemotor nach einem der vorangegangenen Ansprüche,
**dadurch gekennzeichnet, dass**
das Flanschteil (3) einen quadratischen oder rechteckförmigen radialen Außenumfang mit gerundet ausgeführten Ecken aufweist.

13. Getriebemotor nach einem der vorangegangenen Ansprüche,
**dadurch gekennzeichnet, dass**
die Rotorwelle in eine Axialbohrung eines Kupplungselements, dessen ebenen Abflachungen parallel zu entsprechenden ebenen Abflachungen der eintreibenden Welle (20) des Getriebes ausgerichtet sind, wobei die jeweilige Abflachung der eintreibenden Welle (20) von der jeweiligen Abflachung des Kupplungselements nur mittels einer auf die eintreibende Welle (20) aufgesteckten Kunststoffkappe (22) getrennt sind.

14. Getriebemotor nach einem der vorangegangenen Ansprüche,
**dadurch gekennzeichnet, dass**
das Flanschteil (3) auf seiner vom Elektromotor (11) abgewandten Seite hervorstehende, Zentrierzapfen (14) aufweist, deren radial Innenseite oder radial Außenseite gekrümmt ausgeführt ist,

15. Getriebemotor nach Anspruch 14,
**dadurch gekennzeichnet, dass**
das Getriebegehäuse (1) konvexe Zentrierflächen (60) aufweist, an denen die Zentrierzapfen (14) mit ihrer gekrümmt ausgeführten Innenseite oder Außenseite anliegen,

## Claims

1. A geared motor, having an electric motor (11) and a gear unit,
wherein the gear unit has a flange part (3) which is fastened to a housing part of the gear unit by means of first screws (5),
**characterised in that**
the flange part (3) on its side which faces the electric motor (11) has a hollow-cylindrically shaped collar region (6),
with the cylinder axis of the hollow-cylindrically shaped collar region being oriented coaxially with the axis of rotation of the rotor shaft of the electric motor (11),
with a connecting part (7) having a first hollow-cylindrically shaped collar region (13), and a second hollow-cylindrically shaped collar region (10) oriented coaxially therewith,
with the first collar region (13) being arranged radially outside the second collar region (10),
with the first collar region (13) being mounted on the collar region (6) of the flange part (3),
with the second collar region (10) being arranged radially within the collar region (6) of the flange part (3),
with the connecting part (7) being connected to the electric motor (11) by means of second screws,
with bayonet wings (9) radially projecting and/or protruding radially outwards from the second collar region (10).

2. A geared motor according to claim 1,
**characterised in that**
the flange part (3) has a continuous cutout into which at least two projections, spaced apart from each other in the circumferential direction, protrude, directed radially inwards,
with the second collar region (10) protruding through the cutout.

3. A geared motor according to claim 2,
**characterised in that**
the greatest radial distance between the bayonet wings (9) is less than the greatest internal radius of the cutout and greater than the smallest clear internal diameter of the cutout in the angle-at-circumference region covered by the elevations.

4. A geared motor according to one of the preceding claims,
**characterised in that**
the region covered in the axial direction by the second collar region (10) encompasses the region covered in the axial direction by the first collar region (6).

5. A geared motor according to one of the preceding claims,
**characterised in that**
a spring element (8) supported on the connecting part (7) presses on the flange part (3).

6. A geared motor according to claim 5,
**characterised in that**
the spring element (8) is arranged radially within the first collar region (6) and radially within the collar region of the flange part (3).

7. A geared motor according to one of the preceding claims 5 or 6,
**characterised in that**
the spring element (8) is arranged radially outside the second collar region,
and **in that**
the region covered in the axial direction by the first collar region (6) encompasses the region covered in the axial direction by the spring element (8).

8. A geared motor according to one of the preceding claims 5 to 7,
**characterised in that**
the spring element (8) is supported on axially directed elevations of the connecting part.

9. A geared motor according to one of the preceding claims,
**characterised in that**
second screws are spaced apart from the spring element (8) in the axial direction.

10. A geared motor according to claim 9,
**characterised in that**
the second screws are arranged at the same radial distance as the elevations.

11. A geared motor according to one of the preceding claims 9 or 10,
**characterised in that**
the radial distance region covered by the second screws overlaps with or encompasses
the radial distance region covered by the elevations.

12. A geared motor according to one of the preceding claims,
**characterised in that**
the flange part (3) has a square or rectangular radial outer circumference with rounded corners.

13. A geared motor according to one of the preceding claims,
**characterised in that**
the rotor shaft [verb missing] into an axial bore in a coupling element, the flat flattened portions of which are oriented parallel to corresponding flat flattened portions of the input shaft (20) of the gear unit, with the respective flattened portion of the input shaft (20) being separated from the respective flattened portion of the coupling element only by means of a plastics-material cap (22) mounted on the input shaft (20).

14. A geared motor according to one of the preceding claims,
**characterised in that**
the flange part (3) has on its side which faces away from the electric motor (11) protruding centring pins (14), the radially inner sides or radially outer sides of which are embodied curved.

15. A geared motor according to claim 14,
**characterised in that**
the gear unit housing (1) has convex centring faces (60) against which the centring pins (14) lie with their curved inner sides or outer sides.

## Revendications

1. Motoréducteur, comprenant un moteur électrique (11) et une transmission,
la transmission présentant une partie bride (3) qui est fixée à une partie carter de la transmission au moyen de premières vis (5),
**caractérisé en ce que**
la partie bride (3) présente une région de collerette (6) de forme cylindrique creuse sur son côté tourné vers le moteur électrique (11),
l'axe cylindrique de la région de collerette de forme cylindrique creuse étant orienté de manière coaxiale par rapport à l'axe de rotation de l'arbre de rotor du moteur électrique (11),
une pièce de liaison (7) présentant une première région de collerette (13) de forme cylindrique creuse et une deuxième région de collerette (10) de forme cylindrique creuse orientée de manière coaxiale par rapport à celle-ci,
la première région de collerette (13) étant agencée à l'extérieur de la seconde région de collerette (10),
la première région de collerette (13) étant enfichée sur la région de collerette (6) de la partie bride (3),
la deuxième région de collerette (10) étant agencée radialement à l'intérieur de la région de collerette (6) de la partie bride (3),
la pièce de liaison (7) étant reliée au moteur électrique (11) au moyen de deuxièmes vis,
des ailettes à baïonnette (9) faisant saillie radialement et/ou faisant saillie radialement vers l'extérieur au niveau de la deuxième région de collerette (10).

2. Moto-réducteur selon la revendication 1,
**caractérisé en ce que**
la partie bride (3) présente un évidement continu dans lequel pénètrent au moins deux saillies espacées l'une de l'autre dans la direction circonférentielle et dirigées radialement vers l'intérieur,
la deuxième région de collerette (10) traversant l'évidement.

3. Moto-réducteur selon la revendication 2,
**caractérisé en ce que**
le plus grand espacement radial des ailes de baïonnette (9) est inférieur au plus grand rayon libre de l'évidement,
et est supérieur au plus petit diamètre intérieur libre de l'évidement dans la région angulaire circonférentielle couverte par les protubérances.

4. Moto-réducteur selon l'une quelconque des revendications précédentes,
**caractérisé en ce que**
la région recouverte par la deuxième région de collerette (10) dans la direction axiale comprend la région recouverte par la première région de collerette (6) dans la direction axiale.

5. Moto-réducteur selon l'une quelconque des revendications précédentes,
**caractérisé en ce que**
un élément formant ressort (8) appuyé contre la pièce de liaison (7), en particulier un ressort hélicoïdal, appuie sur la partie bride (3).

6. Moto-réducteur selon la revendication 5,
**caractérisé en ce que**
l'élément formant ressort (8) est agencé radialement à l'intérieur de la première région de collerette (6) et radialement à l'intérieur de la région de collerette de la partie bride (3).

7. Moto-réducteur selon l'une quelconque des revendications 5 ou 6,
**caractérisé en ce que**
l'élément formant ressort (8) est agencé radialement à l'extérieur de la deuxième région de collerette,
et **en ce que**
la région recouverte dans la direction axiale par la première région de collerette (6) comprend la région recouverte par l'élément formant ressort (8) dans la direction axiale.

8. Moto-réducteur selon l'une quelconque des revendications 5 ou 7,
**caractérisé en ce que**
l'élément formant ressort (8) s'appuie contre des protubérances orientées axialement de la pièce de liaison.

9. Moto-réducteur selon l'une quelconque des revendications précédentes,
**caractérisé en ce que**
les deuxièmes vis, en particulier les têtes de vis des deuxièmes vis, sont espacées par rapport à l'élément formant ressort (8) dans la direction axiale.

10. Moto-réducteur selon la revendication 9,
**caractérisé en ce que**
les deuxièmes vis sont agencées selon le même espacement radial que les protubérances.

11. Moto-réducteur selon l'une quelconque des revendications 9 ou 10,
**caractérisé en ce que**
la région d'espacement radial recouverte par les deuxièmes vis chevauche ou englobe la région d'espacement radial recouverte par les protubérances.

12. Moto-réducteur selon l'une quelconque des revendications précédentes,
**caractérisé en ce que**
la partie bride (3) présente une périphérie extérieure radiale carrée ou rectangulaire avec des coins arrondis.

13. Moto-réducteur selon l'une quelconque des revendications précédentes,
**caractérisé en ce que**
l'arbre de rotor se situe dans un alésage axial d'un élément d'accouplement, dont les méplats plans sont alignés parallèlement aux méplats plans correspondants de l'arbre d'entraînement (20) de la transmission, le méplat respectif de l'arbre d'entraînement (20) n'étant séparé du méplat respectif de l'élément d'accouplement qu'au moyen d'un capuchon en plastique (22) enfiché sur l'arbre d'entraînement (20).

14. Moto-réducteur selon l'une quelconque des revendications précédentes,
**caractérisé en ce que**
la partie bride (3) présente, sur son côté opposé au moteur électrique (11), des tourillons de centrage (14) en saillie dont le côté radialement intérieur ou radialement extérieur est incurvé.

15. Moto-réducteur selon la revendication 14,
**caractérisé en ce que**
le carter de transmission (1) présente des surfaces de centrage convexes (60) contre lesquelles reposent les côtés intérieurs ou extérieurs incurvés des tourillons de centrage (14).
